# EUROPEAN PATENT SPECIFICATION

(11) **EP 2 946 304 B1**
(45) Date of publication and mention of the grant of the patent: **04.03.2020**
(21) Application number: 13871522.2
(22) Date of filing: 15.01.2013
(51) Int. Cl.: G06F 9/54, G06F 9/50, H04L 12/815

(54) **VERTICALLY-TIERED CLIENT-SERVER ARCHITECTURE**
VERTIKAL GESCHICHTETE CLIENT-SERVER-ARCHITEKTUR
ARCHITECTURE CLIENT-SERVEUR HIÉRARCHISÉE VERTICALEMENT

(43) Date of publication of application: 25.11.2015
(73) Proprietor: Hewlett Packard Enterprise Development LP, Houston, TX 77070 (US)
(72) Inventor: CHANG, Jichuan, Palo Alto, California 94304 (US); FARABOSCHI, Paolo, E-08174 Sant Cugat del Valles (ES); RANGANANTHAN, Parthasarathy, Palo Alto, California 84304 (US)
(74) Representative: Haseltine Lake Kempner LLP
(86) International application number: PCT/US2013/021568
(87) International publication number: WO 2014/112975

(56) References cited:
- EP-A1- 2 189 904
- WO-A1-2009/158680
- US-A1- 2002 129 274
- US-A1- 2006 206 747
- US-A1- 2009 327 412
- US-A1- 2010 195 974
- US-A1- 2012 131 597
- Anonymous: "Data Center Multi-Tier Model Design - Cisco", , 14 May 2008 (2008-05-14), XP055426552, Retrieved from the Internet: URL:https://www.cisco.com/c/en/us/td/docs/ solutions/Enterprise/Data_Center/DC_Infra2 _5/DCInfra_2.html [retrieved on 2017-11-20]

## Description

### BACKGROUND

Today's scale-out data centers deploy many (e.g., thousands of) servers connected by high-speed network switches. Large web service providers, such as but not limited to search engines, online video distributors, and social media sites, may employ a large number of certain kinds of servers (e.g., frontend servers) while using less of ether kinds of servers (e.g., backend servers). Accordingly, the data center servers may be provided as logical groups. Within each logical group, servers may run the same application but operate on different data partitions. For example, an entire dataset may be partitioned among the servers within each logical group, sometimes using hashing function for load balancing, to achieve high scalability.

Data center networks typically treat ail servers in different logical groups as direct end points in the network, and thus do not address traffic patterns found in scale-out data centers. For example, state-of-the-art deployments may use Ethernet or InfiniBand networks to connect logical groups having N frontend servers and M memcached servers (a total of N+M end-points). These networks use more switches, which cost more in both capital expenditures (e.g., cost is nonlinear with respect to the number of ports) and operating expenditures (e g,, large switches use significant energy). Therefore, it can be expensive to build a high-bandwidth data center network with this many end-points.

EP 2189904 A1 describes a data hub for electronically routing data within a computer or between different computers.

WO 2009/158680 A1 relates to methods and apparatus to reduce context switching during data transmission and reception in a multiprocessor devices.

"Data Center Multi-Tier Model Design - Cisco", 14 May 2008, XP 55426552, Retrieved from the Internet on 20 November 2017: URL:https//www.cisco.com/c/en/us/td/docs/solutions/Enterprise/Data_Centre/ DC_lnfra2_5/DCInfra_2.html provide details about a multi-tier data centre design recommended by a particular supplier.

### BRIEF DESCRIPTION OF THE DRAWINGS

Figures 1a-b are diagrams of an example data center which may implement a vertically-tiered client-server architecture.
Figures 2a-b show an example vertically-tiered client-server architecture.
**Figures 3a****-d** illustrate example operations in a vertically-tiered client-server architecture,
**Figure 4** is a flowchart of example operations in a vertically-tiered client-server architecture.

### DETAILED DESCRIPTION

General-purpose distributed memory caching (also known as memcached) computing systems are examples of one of the tiers used in scale-out data centers. For example, many web service providers, such as but not limited to search engines, online video distributors, and social media sites, utilize memcached computing systems to provide faster access to extensive data stores. Memcached computing systems maintain frequently accessed data and objects in a local cache, typically in transient memory that can be accessed faster than databases stored in nonvolatile memory. As such, memcached servers reduce the number of times the database itself needs to be accessed, and can speed up and enhance the user experience on data-driven sites,

Memcached computing systems may be implemented in a client-server architecture, A key-value associative array (e.g., a hash table) may be distributed across multiple servers. Clients use client side libraries to contact the servers. Each client may know all of the servers, but the servers do not communicate with each other. Clients contact a server with queries (e.g., to store or read data or object). The server determines where to store or read the values. That is, servers maintain the values in transient memory when available, When the transient memory is full, the least-used values are removed to free more transient memory, If the queried data or object has been removed from transient memory, then the server may access the data or object from the slower nonvolatile memory, typically residing on backend servers. Addressing the cost and power inefficiency of data center networks is at the forefront of data center design.

The systems and methods disclosed herein implement hardware and software to provide low-cost, high-throughput networking capabilities for data centers, The data centers may include multiple tiers of scale-out servers. But instead of connecting all nodes in multiple tiers (e.g., as direct peers and end points in the data center network), the number of end points are reduced by logically aggregating a subgroup of servers from two (or more) tiers as a single end point to the network, referred to herein as an Aggregated End Point (AEP). Within the Aggregated End Point (AEP), a group of servers from different tiers can be connected using low-power, low-cost, yet high-bandwidth and low-latency local fabric within an AEP. For example, the servers may be connected using a PCIe bus or other local fabrics that are appropriate for short-distance physical neighborhoods, A global network may then be used to connect the subgroup end points among the servers. While this is conceptually similar to aggregating multiple functionalities within a single larger server (e.g., a scale-up model), this configuration has the additional advantage of being compatible with a distributed (e.g., a scale-out) model. Scale-out models are more immune to failures than scale-tip models, and can leverage multiple smaller and less expensive servers.

Presenting various numbers and configurations of servers in different tiers as a vertically aggregated, tiered architecture can achieve benefits of network aggregation without needing special hardware support. In addition, the architecture reduces processing overhead for small packets (typical in memcached servers executing large web applications) by aggregating and forwarding small packets at the protocol- or application-level.

Before continuing, it is noted that as used herein, the terms "includes" and "induding" mean, but are not limited to, "includes" or "including" and "includes at least" or "Including at least" The term "based on" means "based on" and "based at least in part on."

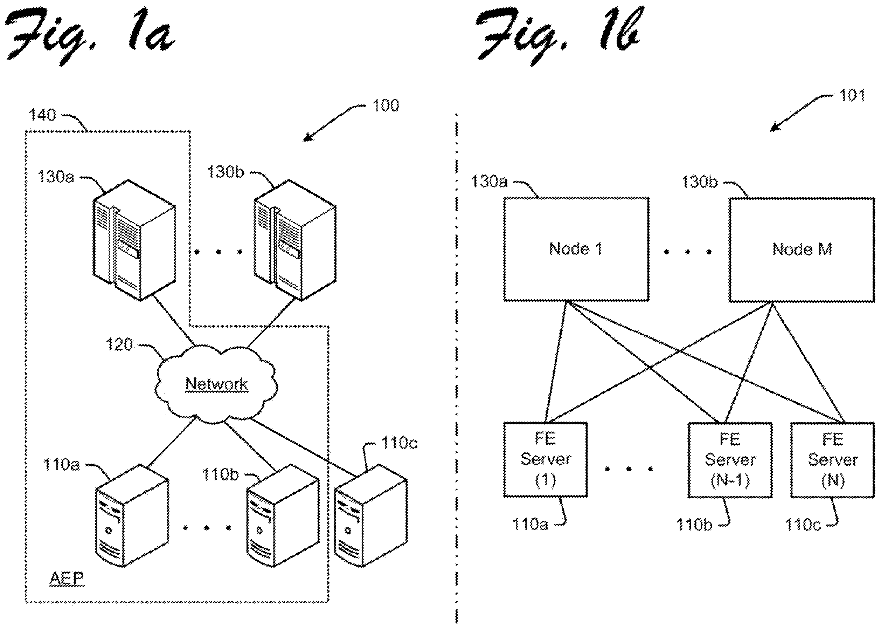

**Figures 1a-b** are diagrams of an example data center which may implement a vertically-tiered client-server architecture. Figure 1a is a physical representation 100 of the data center. Figure 1b is a topological representation 101 of the data center corresponding to Figure 1a. The data center 100 may include server architectures which continue to increase traditional server densities, and as such, may be referred to as "scale-out" data centers. Scale-out data centers may include any number of components, as illustrated in the figures.

The data center may be implemented with any of a wide variety of computing devices, such as, but not limited to, servers, storage, appliances (e.g., devices dedicated to providing a service), and communication devices, to name only a few examples of devices which may be configured for installation in racks. Each of the computing devices may include memory and a degree of data processing capability at least sufficient to manage a communications connection with one another, either directly (e.g., via a bus) or indirectly (e.g., via a network). At least one of the computing devices is also configured with sufficient processing capability to execute the program code described herein.

An example architecture may include frontend (FE) servers 110a-c presenting to client devices (not shown). Each of the frontend servers 110a-c may be connected via the data center network 120 to backend servers 130a-b (e.g., memcached servers). For purposes of illustration, the data center may execute an online data processing service accessed by the client computing devices (e.g., Internet users). Example services offered by the data center may include general purpose computing services via the backend servers 130a-b. For example, services may include access to data sets hosted on the Internet or as dynamic data endpoints for any number of client applications, such as search engines, online video distributors, and social media sites. Services also include interfaces to application programming interfaces (APIs) and related support infrastructure which were previously the exclusive domain of desktop and local area network computing systems, such as application engines (e.g., online word processing and graphics applications), and hosted business services (e.g., online retailers),

Clients are not limited to any particular type of devices capable of accessing the frontend servers 110a-c via a network such as the Internet, In one example, the communication network includes the Internet or other mobile communications network (e.g., a 3G or 4G mobile device network). Clients may include by way of illustration, personal computers, tablets, and mobile devices. The frontend servers 110a-c may be any suitable computer or computing device capable of accessing the backend servers 130a-b. Frontend servers 110a-c may access the backend servers 130a-b via the data center network 120, such as a local area network (LAN) and/or wide area network (WAN). The data center network 120 may also provide greater accessibility in distributed environments, for example, where more than one user may have input and/or receive output from the online service.

As shown in Figure 1b, the data center 100 may include N frontend (FE) servers and M backend (e.g., memcached) servers. In an example, N is much larger than M. Network communication in the data center 100 has the following characteristics, infra-tier traffic is very light because servers within a scale-out tier (e.g., memcached) either communicate very little or do not communicate at all. Any pair of servers across two tiers can communicate, logically forming a complete bipartite graph. In addition, the sizes of different tiers (e.g., the number of servers within a tier) can be very different. For example, the ratio of server counts between the web frontend tier and memcached tier can be four or more.

The systems and methods disclosed herein implement a multi-level aggregation architecture within the data center. Aggregation is illustrated in Figure 1a by dashed lines 140. in an example, the multi-level aggregation architecture is a vertically tiered architecture. The term "Vertically tiered" architecture refers to tiers which may be collapsed (e.g., two tiers collapsed into one tier) to reduce the architecture height,

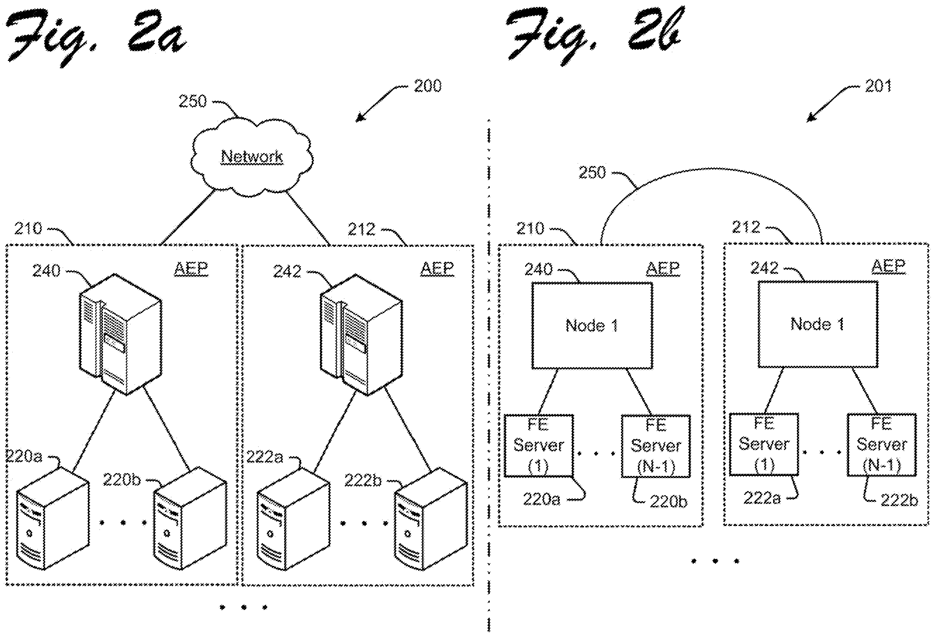

The context for vertically-tiered, Client-server architecture relates to common use-cases. Without losing generality, the architecture may be implemented as a frontend+memcached multi-tier data center, similar to configurations that a large web application (e.g., a social media site) employs. In an example, an efficient and high bandwidth local network (e.g., PCIe) may be combined with an Ethernet (or similar) network to provide low-overhead and packet aggregation/forwarding, This approach addresses the network hardware bandwidth/port-count bottleneck, offers reduced overhead for handling small packets, and enhance memory capacity management and reliability. An example is discussed in more detail with reference to Figures 2a-b.

It is noted that the components shown in the figures are provided only for purposes of illustration of an example operating environment, and are not intended to limit implementation to any particular system,

**Figures 2a****-b** show an example vertically-tiered client-server architecture. Figure 2a is a physical representation 200 of the data center. Figure 2b is a topological representation 201 of the data center corresponding to Figure 2a, In an example, the multi-tier data center is shown as it may be represented as an array of approximately equal-sized subgroups (e.g., two are shown in the figure, 210 and 212) connected via an inter-AEP fabric. Each of the subgroups 210 and 212 represents a single aggregated end point (AEP) in the data center network.

Within each AEP 210 and 212, one server may serve as a central hub (illustrated by servers 240 and 242, respectively). The central hub interfaces with other AEPs and serves as the intra-AEP traffic switch. For example, central hub 220a in AEP 210 may interface with the central hub 242 in AEP 212, Different servers in each AEP 210 and 212 can be interconnected via a local fabric in AEP 210 (and fabric 232 in AEP 212). In an example, the local fabric may be a cost-efficient, energy-efficient high-speed fabric such as PCIe,

The traffic patterns among the servers within each AEP and across AEPs are known. As such, the fabric can also be optimized (tuned) to support specific traffic patterns. For example, in a frontend/memcached architecture, frontend (FE) servers talk to memcached nodes. But there is near-zero traffic between FE servers or between memcached servers. Thus, the memcached servers may be chosen as the hubs within different AEPs,

For purposes of illustration, the second tier server (the memcached server) in each AEP aggregates memcached requests within the AEP using protocol-level semantics to determine the target server. For example, the frontend server may use consistent hashing to calculate the target memcached server for a given memcached <key, value> request. These requests are transferred over intra-AEP fabric (e.g., PCIe links) to the hub node. The hub node calculates a corresponding target server ID.

In this illustration, if the target is the central hub itself, the central hub server handles the request and sends the response back to the AEP-local frontend server, If the target server is a remote server (e.g., in one of the AEPs), then the central hub buffers the requests. For example, the request may be buffered based on the target server ID. In another example, the request may be buffered based on the target AEP ID, for example, if multiple servers can be included in one AEP for further aggregation. When the buffer accumulates sufficient packets, the central hub translates these requests into one multi-get request (at the application protocol level) or a jumbo network packet (at the network protocol level) and forwards the request to the target.

it is noted that while aggregation need not be implemented in every instance, aggregation can significantly reduce the packet processing overhead for small packets. However, this can also result in processing delays, for example, if there are not enough small packets for a specific target ID to aggregate into a single request. Thus, a threshold may be implemented to avoid excessive delay. In an example, if wait time of the oldest packets in the buffer exceeds a user-specified aggregation latency threshold, even if the buffer does not have sufficient packets to aggregate into a single request, the central hub still sends the packets when the threshold is satisfied, for example, to meet latency Quality of Service (QoS) standards.

In any event, when the target server receives the request packet(s) (either separately, or aggregated), the requests are processed and sent back as a response packet to the source. It is noted that the response packets can be sent immediately, or accumulated in a buffer as an aggregated response. The source server receives the response packet, disaggregates the response packet into multiple responses (if previously aggregated), and sends the response(s) to the requesting frontend servers within the AEP,

While this example illustrates handling requests according to a memcached protocol, it is noted that other interfaces may also be implemented, For example, the request may be organized in shards, where the target server can be identified by disambiguating through a static hashing mechanism (such as those used with traditional SQL databases), or other distributed storage abstractions.

Before continuing, it is noted that while the figure depicts two tiers of servers for purposes of illustration, the concepts disclosed herein can be extended to any number of multiple tiers. In addition, the tiers may include any combination of servers, storage, and other computing devices in a single data center and/or multiple data centers. Furthermore, the aggregation architecture described herein may be implemented with any "node" and is not limited to servers (e.g., memcached servers). The aggregation may be physical and/or a logical grouping.

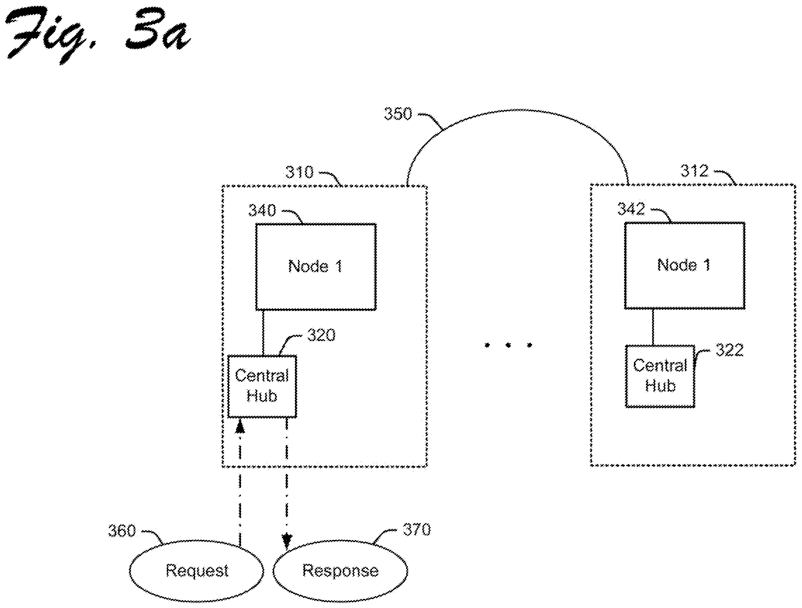

it is noted that in Figures 2a-b and 3a-d, the physical network is shown by solid lines linking components, and the communication of packets between nodes is over the physical network and illustrated by dash-dot-dash lines in Figures 3a-d.

**Figures 3a****-d** illustrate example operations in a vertically-tiered client-server architecture 300. The operations may be implemented, at least in part, by machine readable instructions (such as but not limited to, software or firmware). The machine-readable instructions may be stored on a non-transient computer readable medium and are executable by one or more processor to perform the operations described herein. Modules can be integrated within a self-standing tool, or may be implemented as agents that run on top of existing devices in the data center. The program code executes the function of the architecture. It is noted, however, that the operations described herein are not limited to any specific implementation with any particular type of program code.

in the examples in Figures 3a-d, a plurality of servers form AEPs 310 and 312, shown here in simplified form. In an example, the plurality of servers is custom partitioned in each AEP 310 and 312 to optimize for specific access patterns. For example, the mix of server types within an AEP can vary based on the capacity requirements at different tiers, and the network topology within and across AEPs can be customized to fit server communication patterns.

Each AEP 310 and 312 is connected via an inter-AEP fabric or network 350 (e.g., Ethernet). One of the servers in each AEP is designated as a central hub server. For example, a central hub server 320 is shown in AEP 310, and another central hub server 322 is shown in AEP 312, All of the nodes servers are interconnected within each AEP via an intra-AEP fabric (e.g., PCIe). For example, node 340 is shown connected to central hub 320 in AEP 310; and node 342 is shown connected to central hub 322 in AEP 312

It is noted that other fabrics may also be implemented. In an example, the intra-AEP fabric is faster than the inter-AEP fabric. During operation, the central hub server 320 receives request 360. The central hub server 320 resolves a target server identification (ID) for the request 360. In an example, the central hub server uses protocol-level semantics to resolve the target server ID (for example, using consistent hashing and AEP configuration to calculate the target ID in the frontend+memcached example illustrated above).

In Figure 3a, a use case is illustrated wherein the target server ID is the central hub server 320 itself. In this example use case, the central hub server 320 handles the request and responds. For example, the central hub server may send a response 370.

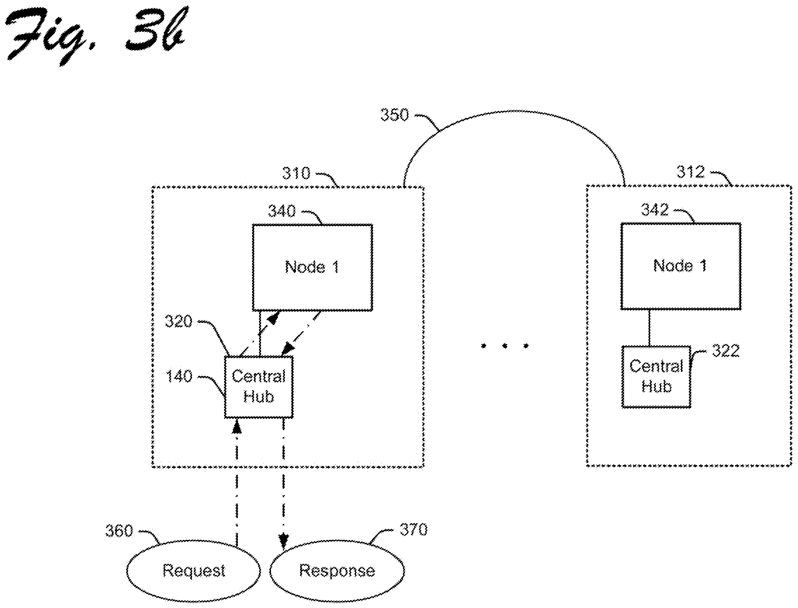

In Figure 3b, a use case is illustrated wherein the target server ID is a local server 340 in the first AEP 310. In this example use case, the central hub server transfers the request 360 over the intra-AEP fabric to the local server 340 in the first AEP 310, It is also possible for the requesting local server to resolve the target ID and, when the target server is a local peer within the AEP, to directly communicate with the target local server.

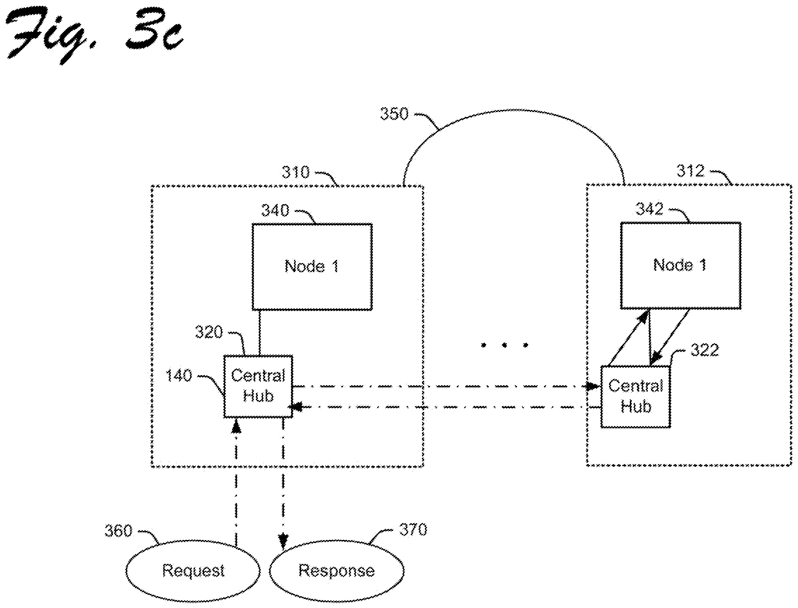

In Figure 3c, a use case is illustrated wherein the target server ID is a remote server 342 in the second AEP 312, In this example use case, the central hub server 320 transfers the request to the central hub server 322 in the second AEP 312, After transferring the request to the second AEP 312, the request is handled by a server in the second AEP 312 identified by the target server ID. The central hub server 320 in the first AEP 310 then receives a response to the request from the second AEP 312.

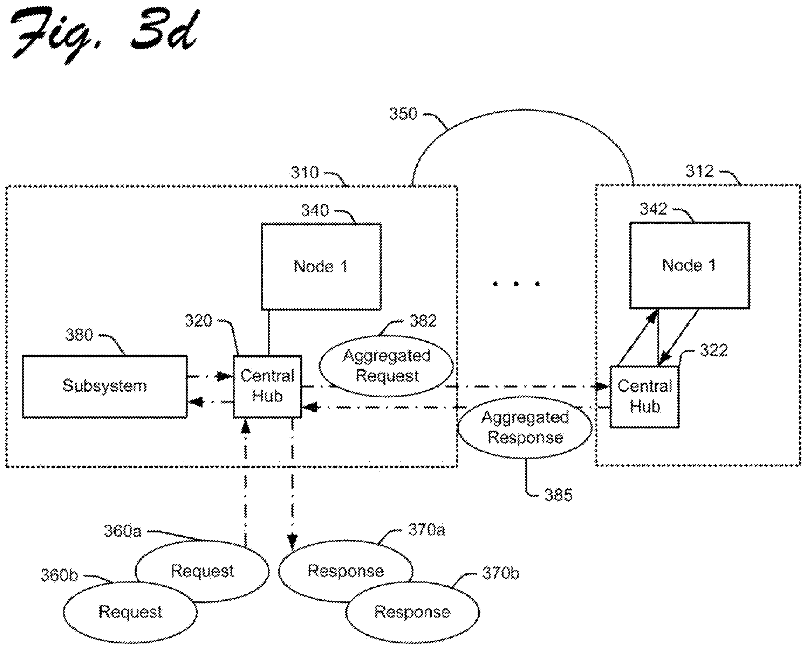

In Figure 3d, a use case is illustrated wherein a buffer-and-forward subsystem 380 is implemented to aggregate packets 360a-b before sending the packets together as a single aggregated request 382 to a server identified by the target server ID. Upon receiving an aggregated request 382, the central hub server 322 either processes the aggregated request by itself, or disaggregates the aggregated request packet before sending disaggregated requests to the local servers identified by the target server ID. Likewise, upon receiving an aggregated response 385, the central hub server 320 disaggregates the aggregated response packet 385 before issuing the disaggregated 370a-b responses.

In an example, an aggregation threshold may be implemented by the buffer-and-forward subsystem 380, The aggregation threshold controls wait time for issuing packets, thereby achieving the benefits of aggregation without increasing latency. By way of illustration, packets may be buffered at the central hub server 320 and the buffered packets may then be issued together as a single request 382 to a server identified by the target server ID. In an example, aggregation may be based on number of packets. That is, the aggregated packet is sent after a predetermined number of packets are collected in the buffer. In an example, aggregation may be based on latency. That is, the aggregated packet is sent after a predetermined time. In another example, the aggregation threshold may be based on both a number of packets and a time, or a combination of these and/or other factors.

The architectures described herein may be customized to optimize for specific access patterns in the data center, Protocol-level or application-level semantics may be used to calculate target node IDs and aggregate small packets to further reduce software related overheads. As such, vertical aggregation of tiered scale-out servers reduces the number of end points, and hence reduces the cost and power requirements of data center networks. In addition, using low-cost, high-speed fabric within the AEP improves performance and efficiency for local traffic.

Before continuing, it should be noted that the examples described above are provided for purposes of illustration, and are not intended to be limiting. Other devices and/or device configurations may be utilized to carry out the operations described herein. For example, a "server" could be as simple as a single component on a circuit board, or even a subsystem within an integrated system-on-chip. The individual servers may be allocated in the same chassis, circuit board, integrated circuit (IC), or system-on-chip, in other words, the implementation of an AEP is not intended to be limited to a physically distributed cluster of individual servers, but could be implemented within a single physical enclosure or component.

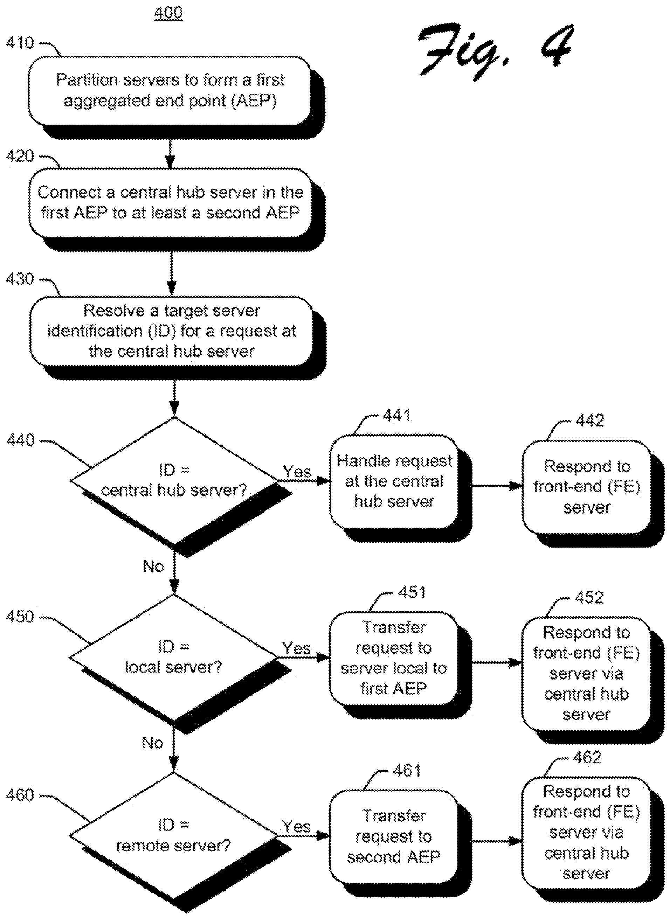

**Figure 4** is a flowchart of example operations in a vertically-tiered client-server architecture. Operations 400 may be embodied as logic instructions on one or more computer-readable medium. When executed on a processor, the logic instructions cause a general purpose computing device to be programmed as a spatial-purpose machine that implements the described operations, in an example, the components and connections depicted in the figures may be used.

Operation 410 includes partitioning a plurality of servers in the data center to form a first aggregated end point (AEP). The first AEP may have fewer external connections than the individual servers. Operation 420 includes connecting a central hub server in the first AEP to at least a second AEP via an intra-AEP fabric. Operation 430 includes resolving a target server identification (ID) for a request at the central hub server,

In at decision block 440 it is determined that the target server ID is the central hub server, operation 441 includes handling the request at the central hub server, and in operation 442 responding to a frontend (FE) server.

If at decision block 460 it is determined that the target server ID is a server local to the first AEP, operation 451 includes transferring the request over the intra-AEP fabric to the server local to the first AEP, and in operation 452 responding to the central hub server which then responds to the frontend (FE) server),

if at decision block 460 it is determined that the target server ID is a remote server (e.g., a server in the second AEP), operation 461 includes transferring the request to the second AEP, and in operation 462 responding to the central hub server which then responds to the frontend (FE) server). It is noted that the central hub server at the second AEP may handle the request, or further transfer the request within the second AEP.

In an example, partitioning the servers is based on communication patterns in the data center. Besides the bipartite topology exemplified in the frontend+memcached use-case, other examples can include active-active redundancy, server-to-shared-stomge-communication, and others. it is noted that the operations described herein may be implemented to maintain redundancy and autonomy, while increasing speed of the aggregation of all servers after partitioning,

The operations shown and described herein are provided to Illustrate example implementations. It is noted that the operations are not limited to the ordering shown. Various orders of the operations described herein may be automated or partially automated.

Still other operations may also be implemented. In an example, an aggregation threshold may be implemented to control the wait time for issuing packets, to achieve the benefits of aggregation without increasing latency. The aggregation threshold addresses network hardware cost and software processing overhead, while still maintaining latency QoS. Accordingly, the aggregation threshold may reduce cost and improve power efficiency in tiered scale-out data centers.

By way of illustration, operations may include buffering packets at the central hub server and sending the buffered packets together as a single request to a server identified by the target server ID, Operations may also include sending the buffered packets based on number of packets in the buffer And operations may also include sending the buffered packets based on latency of the packets in the buffer.

It is noted that the examples shown and described are provided for purposes of illustration and are not intended to be limiting. Still other examples are also contemplated.

## Claims

1. A method (400) of vertically aggregating tiered servers in a data center (200) said servers being subdivided between frontend servers and backend servers, said backend servers being Memcached servers, wherein there is zero or near-zero traffic between said frontend servers and there is zero or near-zero traffic between said Memcached servers, the method comprising:
partitioning (410), based on communication patterns in the data center, a plurality of servers in the data center to form an array of aggregated end points, 'AEPs', (210) by selecting for each AEP a different Memcached server of the data center as a central hub server of the AEP, wherein each AEP (210) comprises a subgroup of servers from two or more tiers in a frontend/Memcached architecture, and wherein multiple servers within each AEP (210) are connected by an intra-AEP network fabric and different AEPs are connected (420) by an inter-AEP network (250), the different central hub server of each AEP acting as an end-point on the inter-AEP network (250);
resolving (450) a target server identification, 'ID', for a request from an AEP- local server at a central hub server (240) in a first AEP (210);
if the target server ID is the central hub server (240) in the first AEP (210), handling (441) the request at the central hub server in the first AEP and responding to the requesting server;
if the target server ID is another server local to the first AEP (210), redirecting (451) the request over the intra-AEP fabric to the server local to the first AEP; and
if the target server ID is a server in a second AEP (212) transferring (461) the request to the second AEP.

2. The method (400) of claim 1, wherein partitioning (410) the plurality of servers is statically performed by connecting the servers and AEPs.

3. The method (400) of claim 1, wherein partitioning (410) the plurality of servers is dynamically performed wherein a network fabric between servers can be programmed after deployment.

4. The method (400) of claim 1, further comprising buffering packets at the central hub server (240) and sending multiple buffered packets together as a single request to a serve identified by the target server ID.

5. The method (400) of claim 1, further comprising at least one of sending the multiple buffered packets based on number of packets accumulated and sending the buffered packets when a buffered packet wait time exceeds a latency threshold value.

6. A system comprising:
a plurality of servers in a data center (200) said servers being subdivided between frontend servers and backend servers, said backend servers being Memcached servers, wherein there is zero or near-zero traffic between said frontend servers and there is zero or near-zero traffic between said Memcached servers, the plurality of servers forming an array of aggregated end points, 'AEPs', wherein the plurality of servers are partitioned into AEPs (210) based on communication patterns in the data center (200), each AEP (210) comprising a subgroup of servers from two or more tiers in a frontend/Memcached architecture and including a different Memcached server of the data center as a central hub server of the AEP, wherein multiple servers within each AEP (210) are connected by an intra-AEP network fabric and different AEPs are connected by an inter-AEP network (250), the different central hub server of each AEP acting as an end-point on the inter-AEP network (250);
a central hub server (240) in a first AEP (210), the central hub server (240) resolving a target server identification, 'ID', for a request from an AEP-local server (220a) at a central hub server (240) in a first AEP (210):
handling the request at the central hub server (240) in the first AEP (210) and responding to the requesting server, if the target server ID is the central hub server (240) in the first AEP (210); and
redirecting the request over the intra-AEP fabric to the server local (220b) to the first AEP (210), if the target server ID is another server local to the first AEP; and
transferring the request to the second AEP (212) if the target server ID Is a server in a second AEP.

7. The system of claim 6, wherein the central hub server (240) receives a response to the request from the second AEP (212) after transferring the request to the second AEP (212).

8. The system of claim 6, wherein the central hub server (240) further sends a response to a local requesting server (220a) within the first AEP (210).

9. The system of claim 6, wherein individual servers within the AEP (210) are physically co-located in a same chassis or circuit hoard.

10. The system of claim 6, wherein individual servers within the AEP (210) are physically co-located in a same integrated circuit or system-on-chip.

11. The system of claim 6, wherein the central hub server (240) disaggregates an aggregated packet before delivering individual responses.

12. The system of claim 6, wherein the central hub server (240) uses application-level semantics or protocol-level semantics to resolve the target server ID.

13. The system of claim 6, further comprising a buffer-and-forward subsystem to aggregate packets before sending the packets together as a single request to a server identified by the target server ID.

14. The system of claim 13, wherein the buffer-and-forward subsystem is further to send the buffered packets when a buffered packet wait time exceeds a latency threshold value.

## Patentansprüche

1. Verfahren (400) zum vertikalen Aggregieren von gestuften Servern in einem Datenzentrum (200), wobei die Server zwischen Front-End-Servern und Back-End-Servern unterteilt sind, wobei die Back-End-Server Memcached-Server sind, wobei zwischen den Front-End-Servern kein oder nahezu kein Datenverkehr besteht und zwischen den Memcached-Servern kein oder nahezu kein Datenverkehr besteht, wobei das Verfahren Folgendes umfasst:
Partitionieren (410) mehrerer Server in dem Datenzentrum basierend auf Kommunikationsmustern in dem Datenzentrum, um ein Array von aggregierten Endpunkten, AEPs, (210) auszubilden, indem für jeden AEP ein anderer Memcached-Server des Datenzentrums als zentraler Hub-Server des AEP ausgewählt wird, wobei jeder AEP (210) eine Untergruppe von Servern aus zwei oder mehr Stufen in einer Front-End/Memcached-Architektur umfasst und wobei mehrere Server in jedem AEP (210) durch eine Intra-AEP-Netzwerkstruktur verbunden sind und verschiedene AEPs durch ein Inter-AEP-Netzwerk (250) verbunden (420) sind, wobei der andere zentrale Hub-Server jedes AEP als ein Endpunkt auf dem Inter-AEP-Netzwerk (250) wirkt;
Auflösen (450) einer Zielserveridentifikation, "ID", für eine Anforderung von einem für den AEP lokalen Server an einem zentralen Hub-Server (240) in einem ersten AEP (210);
falls die Zielserver-ID der zentrale Hub-Server (240) in dem ersten AEP (210) ist, Behandeln (441) der Anforderung an dem zentralen Hub-Server in dem ersten AEP und Reagieren auf den anfordernden Server;
falls die Zielserver-ID ein anderer für den ersten AEP (210) lokaler Server ist, Umleiten (451) der Anforderung über die Intra-AEP-Struktur an den für den ersten AEP lokalen Server; und
falls die Zielserver-ID ein Server in einem zweiten AEP (212) ist, Übertragen (461) der Anforderung an den zweiten AEP.

2. Verfahren (400) nach Anspruch 1, wobei das Partitionieren (410) der mehreren Server durch Verbinden der Server und AEP statisch durchgeführt wird.

3. Verfahren (400) nach Anspruch 1, wobei das Partitionieren (410) der mehreren Server dynamisch durchgeführt wird, wobei eine Netzwerkstruktur zwischen den Servern nach der Bereitstellung programmiert werden kann.

4. Verfahren (400) nach Anspruch 1, das ferner ein Puffern von Paketen an dem zentralen Hub-Server (240) und ein Senden mehrerer gepufferter Pakete an einen durch die Zielserver-ID identifizierten Server zusammen als eine einzige Anforderung umfasst.

5. Verfahren (400) nach Anspruch 1, das ferner ein Senden der mehreren gepufferten Pakete basierend auf der Anzahl von angesammelten Paketen und/oder ein Senden der gepufferten Pakete umfasst, wenn eine gepufferte Paketwartezeit einen Latenzschwellenwert überschreitet.

6. System, das Folgendes umfasst:
mehrere Server in einem Datenzentrum (200), wobei die Server zwischen Front-End-Servern und Back-End-Servern unterteilt sind, wobei die Back-End-Server Memcached-Server sind, wobei zwischen den Front-End-Servern kein oder nahezu kein Datenverkehr besteht und zwischen den Memcached-Servern kein oder nahezu kein Datenverkehr besteht, wobei die mehreren Server ein Array von aggregierten Endpunkten, AEP, ausbilden, wobei die mehreren Server basierend auf Kommunikationsmustern in dem Datenzentrum (200) in AEPs (210) partitioniert werden, wobei jeder AEP (210) eine Untergruppe von Servern aus zwei oder mehr Stufen in einer Front-End-/Memcached-Architektur umfasst und einen anderen Memcached-Server des Datenzentrums als einen zentralen Hub-Server des AEP beinhaltet, wobei mehrere Server in jedem AEP (210) durch eine Intra-AEP-Netzwerkstruktur verbunden sind und verschiedene AEPs durch ein Inter-AEP-Netzwerk (250) verbunden sind, wobei der verschiedene zentrale Hub-Server jedes AEP als ein Endpunkt in dem Inter-AEP-Netzwerk (250) wirkt;
einen zentralen Hub-Server (240) in einem ersten AEP (210), wobei der zentrale Hub-Server (240) eine Zielserveridentifikation, "ID", für eine Anforderung von einem für den AEP lokalen Server (220a) an einem zentralen Hub-Server (240) in einem ersten AEP (210) auflöst:
Behandeln der Anforderung an dem zentralen Hub-Server (240) in dem ersten AEP (210) und Reagieren auf den anfragenden Server, falls die Zielserver-ID der zentrale Hub-Server (240) in dem ersten AEP (210) ist; und
Umleiten der Anforderung über die Intra-AEP-Struktur an den für den ersten AEP (210) lokalen Server (220b), falls die Zielserver-ID ein anderer für den ersten AEP lokaler Server ist; und
Übertragen der Anforderung an den zweiten AEP (212), falls die Zielserver-ID ein Server in einem zweiten AEP ist.

7. System nach Anspruch 6, wobei der zentrale Hub-Server (240) eine Reaktion auf die Anforderung von dem zweiten AEP (212) empfängt, nachdem die Anforderung an den zweiten AEP (212) übertragen wurde.

8. System nach Anspruch 6, wobei der zentrale Hub-Server (240) ferner eine Reaktion an einen lokalen anfordernden Server (220a) innerhalb des ersten AEP (210) sendet.

9. System nach Anspruch 6, wobei einzelne Server innerhalb des AEP (210) physikalisch gemeinsam in einem selben Baugruppenträger oder einer selben Schaltungsplatine befindlich sind.

10. System nach Anspruch 6, wobei einzelne Server innerhalb des AEP (210) physikalisch gemeinsam in einer selben integrierten Schaltung oder einem selben System-on-Chip befindlich sind.

11. System nach Anspruch 6, wobei der zentrale Hub-Server (240) ein aggregiertes Paket disaggregiert, bevor individuelle Reaktionen geliefert werden.

12. System nach Anspruch 6, wobei der zentrale Hub-Server (240) Semantik der Anwendungsebene oder Semantik der Protokollebene verwendet, um die Zielserver-ID aufzulösen.

13. System nach Anspruch 6, das ferner ein Puffer-und-Weiterleitung-Untersystem umfasst, um Pakete zu aggregieren, bevor die Pakete zusammen als eine einzige Anforderung an einem durch die Zielserver-ID identifizierten Server gesendet werden.

14. System nach Anspruch 13, wobei das Puffer-und-Weiterleitung-Untersystem ferner die gepufferten Pakete senden soll, wenn eine gepufferte Paketwartezeit einen Latenzschwellenwert überschreitet.

## Revendications

1. Procédé (400) d'agrégation verticale de serveurs étagés dans un centre de données (200), lesdits serveurs étant subdivisés entre serveurs frontaux et serveurs dorsaux, lesdits serveurs dorsaux étant des serveurs Memcached, dans lequel il y a un trafic nul ou quasi nul entre lesdits serveurs frontaux et il y a un trafic nul ou quasi nul entre lesdits serveurs Memcached, le procédé comprenant :
le partitionnement (410), sur la base de motifs de communication dans le centre de données, d'une pluralité de serveurs dans le centre de données pour former un ensemble de points d'extrémité agrégés, « AEP » (210), en sélectionnant pour chaque AEP un différent serveur Memcached du centre de données en tant que serveur concentrateur central de l'AEP, dans lequel chaque AEP (210) comprend un sous-groupe de serveurs de deux étages ou plus dans une architecture frontale/Memcached, et dans lequel de multiples serveurs à l'intérieur de chaque AEP (210) sont connectés par une structure de réseau intra-AEP et différents AEP sont connectés (420) par un réseau inter-AEP (250), le serveur concentrateur central différent propre à chaque AEP agissant en tant que point d'extrémité sur le réseau inter-AEP (250) ;
la résolution (450) d'une identification de serveur cible, « ID », pour une demande provenant d'un serveur local à l'AEP au niveau d'un serveur concentrateur central (240) dans un premier AEP (210) ;
si l'ID de serveur cible est le serveur concentrateur central (240) dans le premier AEP (210), le traitement (441) de la demande au niveau du serveur concentrateur central dans le premier AEP et la réponse au serveur demandeur ;
si l'ID du serveur cible est un autre serveur local au premier AEP (210), la redirection (451) de la demande sur la structure intra-AEP au serveur local au premier AEP ; et
si l'ID du serveur cible est un serveur dans un second AEP (212), le transfert (461) de la demande au second AEP.

2. Procédé (400) selon la revendication 1, dans lequel le partitionnement (410) de la pluralité de serveurs est réalisé de manière statique en connectant les serveurs et les AEP.

3. Procédé (400) selon la revendication 1, dans lequel le partitionnement (410) de la pluralité de serveurs est réalisé de manière dynamique, une structure de réseau entre les serveurs pouvant être programmée après déploiement.

4. Procédé (400) selon la revendication 1, comprenant en outre la mise en mémoire tampon de paquets au niveau du serveur concentrateur central (240) et l'envoi simultané de plusieurs paquets mis en mémoire tampon en tant que demande unique à un serveur identifié par l'ID du serveur cible.

5. Procédé (400) selon la revendication 1, comprenant en outre au moins l'un parmi l'envoi de multiples paquets mis en mémoire tampon sur la base du nombre de paquets accumulés et l'envoi des paquets mis en mémoire tampon lorsqu'un temps d'attente de paquets mis en mémoire tampon dépasse une valeur seuil de temps de latence.

6. Système comprenant :
une pluralité de serveurs dans un centre de données (200), lesdits serveurs étant subdivisés entre serveurs frontaux et serveurs dorsaux, lesdits serveurs dorsaux étant des serveurs Memcached, dans lequel il y a un trafic nul ou quasi nul entre lesdits serveurs frontaux et il y a un trafic nul ou quasi nul entre lesdits serveurs Memcached, la pluralité de serveurs formant un ensemble de points d'extrémité agrégés, « AEP », dans lequel la pluralité de serveurs sont partitionnés en AEP (210) sur la base de motifs de communication dans le centre de données (200), chaque AEP (210) comprenant un sous-groupe de serveurs de deux étages ou plus dans une architecture frontale/Memcached et comportant un différent serveur Memcached du centre de données en tant que serveur concentrateur central de l'AEP, dans lequel de multiples serveurs à l'intérieur de chaque AEP (210) sont connectés par une structure de réseau intra-AEP et différents AEP sont connectés par un réseau inter-AEP (250), le serveur concentrateur central différent de chaque AEP agissant en tant que point d'extrémité sur le réseau inter-AEP (250) ;
un serveur concentrateur central (240) dans un premier AEP (210), le serveur concentrateur central (240) résolvant une identification de serveur cible, « ID », pour une demande d'un serveur local à l'AEP (220a) au niveau d'un serveur concentrateur central (240) dans un premier AEP (210) :
le traitement de la demande au niveau du serveur concentrateur central (240) dans le premier AEP (210) et la réponse au serveur demandeur, si l'ID du serveur cible est le serveur concentrateur central (240) dans le premier AEP (210) ; et
la redirection de la demande sur la structure intra-AEP au serveur local (220b) au premier AEP (210), si l'ID du serveur cible est un autre serveur local au premier AEP ; et
le transfert de la demande au second AEP (212) si l'ID du serveur cible est un serveur dans un second AEP.

7. Système selon la revendication 6, dans lequel le serveur concentrateur central (240) reçoit une réponse à la demande du second AEP (212) après le transfert de la demande au second AEP (212).

8. Système selon la revendication 6, dans lequel le serveur concentrateur central (240) envoie en outre une réponse à un serveur demandeur local (220a) à l'intérieur du premier AEP (210).

9. Système selon la revendication 6, dans lequel des serveurs individuels à l'intérieur de l'AEP (210) sont physiquement co-localisés dans un même châssis ou carte de circuit.

10. Système selon la revendication 6, dans lequel des serveurs individuels à l'intérieur de l'AEP (210) sont physiquement co-localisés dans un même circuit intégré ou système sur puce.

11. Système selon la revendication 6, dans lequel le serveur concentrateur central (240) désagrège un paquet agrégé avant de fournir des réponses individuelles.

12. Système selon la revendication 6, dans lequel le serveur concentrateur central (240) utilise une sémantique au niveau de l'application ou une sémantique au niveau du protocole pour résoudre l'ID du serveur cible.

13. Système selon la revendication 6, comprenant en outre un sous-système d'acheminement et de mise en mémoire tampon pour agréger des paquets avant d'envoyer les paquets ensemble en tant que demande unique à un serveur identifié par l'ID du serveur cible.

14. Système selon la revendication 13, dans lequel le sous-système d'acheminement et de mise en mémoire tampon doit en outre envoyer les paquets mis en mémoire tampon lorsqu'un temps d'attente d'un paquet mis en mémoire tampon dépasse une valeur de seuil de temps de latence.
